# EUROPEAN PATENT SPECIFICATION

(11) **EP 2 178 332 B1**
(45) Date of publication and mention of the grant of the patent: **11.04.2012**
(21) Application number: 08018309.8
(22) Date of filing: 20.10.2008
(51) Int. Cl.: H04W 72/00

(54) **Method and system for service dependent resource allocation**
Verfahren und System für dienstabhängige Ressourcenzuweisung
Procédé et système d'attribution de ressources en fonction des services

(43) Date of publication of application: 21.04.2010
(73) Proprietor: Koninklijke KPN N.V., 2516 CK The Hague (NL)
(72) Inventor: Jorguseski, Ljupco, 2282 TR Rÿswÿk (ZH) (NL); Zhang, Haibin, 2593 VP The Hague (NL)
(74) Representative: Wuyts, Koenraad Maria

(56) References cited:
- EP-A- 1 227 695
- EP-A- 1 298 951
- WO-A-01/28130
- US-A1- 2003 148 768

## Description

### FIELD OF THE INVENTION

The invention relates to a method and system for service dependent resource allocation. More specifically, the invention relates to a method of allocating a resource in a radio communications network configured for providing at least a first service type and a second service type in a cell of said network to a user device, said first service type and said second service type both requiring said resource. The invention also relates to a radio communications network (or a node of such a network) having implemented such a method and to a computer program comprising software code portions for executing such a method.

### BACKGROUND OF THE INVENTION

Radio communications networks are expected to provide more and more services to user devices (mobile phones, portable computers, etc), such as voice, data and real-time services (e.g. mobile TV). However, the most requested and profitable services at present for mobile network operators (MNOs) are still voice and data. Delivering voice and data services together with broadcast/multicast services using the same share of radio resources is likely to reduce the economic efficiency of the mobile network. This is because broadcast/multicast services require large amounts of resources, as compared with voice and data services and in situations where there is a lack of available resource, service blockage occurs.

One of the main concerns related to resource management is that users of the network should receive their contracted quality of service irrespective of the service given to the other users of the network. Also, users will be dissatisfied when services appear not to be available or are not provided with a reasonable quality. Thus, given the fact that network resources are limited by definition, both contractual and perceptual issues matter in allocating radio network resources.

Examples of radio network resources include power, bandwidth, code tree usage etc.

In a UMTS network, a Radio Resource Control (RRC) part of the protocol stack is responsible for the assignment, configuration and release of radio resources between the UE and the UTRAN. This RRC protocol is described in detail in the 3GPP TS 25.331 specifications.

Future generations of networks, e.g. LTE, also provide for allocation and management of resources. For example in LTE, the RRC part of the protocol stack is responsible for the assignment, configuration and release of radio resources between the UE and the E-UTRAN (Evolved UTRAN). This RRC protocol is described in detail in the 3GPP TS 36.331 specifications.

In the prior art, the general principle of resource allocation when a new request is received is based on assessing how much of a resource is used and, based on this assessment, allocating the resource if this is available. Normally, the allocation algorithm is designed such that a resource cannot be used completely by the user devices in order to reserve a sufficient amount of resource for tasks of the network, such as handover.

This method of resource allocation in a radio communications network does not allow a mobile network operator to tune the allocation to his specific needs or desires. Another example is found in document EP 1 227 695 (NTT POCOMO INC) 31 July 2002.

### SUMMARY OF THE INVENTION

It is an object of the present invention to provide an improved method of resource allocation in a radio communications network.

To that end, a method of allocating a resource in a radio communications network is proposed that is configured for providing to a user device at least a first service type and a second service type in a cell of the radio network. The first service type and second service type both require the resource for operation. A request for a service, requiring the resource, is received in the radio network. The total number of service requests (either actual or predicted) within the cell is also obtained and it is determined whether the request from the user device is for a service of the first type or the second type. If the request is for the first service type, the resource is allocated to provide the first service type to the user device only if the total number of requests complies with a first threshold being specific for the first service type. If the request is for the second service type, the resource is allocated to provide the second service type to the user device only if the total number of requests complies with a second threshold being specific for the second service type.

A computer program comprising software code portions configured for, when executed on a computing device, performing this method is also proposed.

Furthermore, a radio communications network configured for providing to a user device at least a first service type and a second service type in a cell of the network is proposed. Both the first service type and second service type require a same resource. The radio communications network comprises a node configured for receiving a request for a service from the user device; The radio communications network also comprises means configured for obtaining a total number of requests (actual or predicted) for services (all service types) in the cell and determination means configured for determining whether the request for a service from the user device is for the first service type or the second service type. Allocation means are provided for allocating the resource for providing the first service type or the second service type. If the request is for the first service type, the resource is allocated to provide the first service type to the user device only if the total number of requests complies with a first threshold being specific for the first service type. If the request is for the second service type, the resource is allocated to provide the second service type to the user device only if the total number of requests complies with a second threshold being specific for the second service type.

Examples of service types include voice, data and real-time services, such as mobile TV.

At least one step of the method can be performed in a node of a radio communications network, such as a radio network controller. This may be a suitable node in a UMTS network.

For other networks, such as LTE, one or more steps of the resource allocation method may be performed in a controller of the eNB of the cell.

By introducing service specific thresholds in the resource allocation management algorithm, the proposed method, computer program and radio communications network allow a network operator to decide on resource allocation on a service specific basis, thereby allowing him to prioritize a specific service at the expense of another service. By prioritizing different services with thresholds in the total number requests, instead of thresholds in the normally used resource usage, the resource can be used in a more efficient way.

The total number of requests can be obtained by predictive calculation, as example of which is described in US 6,721,568, which is incorporated in the present application by reference in its entirety. In particular, a current measured parameter value in a cell may be determined and a future value associated with an event that may impact the measured parameter value may be predicted. The current measured value and the predicted value may then be combined to provide a combined value.

The total number of requests may include the number of active user devices in a cell requesting or using the corresponding resource.

The service specific thresholds may be varied by the network operator in order to vary prioritization of services.

In order to avoid unnecessary processing, the usage of the resource (e.g. the percentage of usage) may first be evaluated and compared to one or more non-service specific thresholds. In particular, if, upon receiving a request for a service, resource usage is above a first non-service specific threshold (in order to guarantee sufficient resource capacity for handling network requests), the resource should not be allocated and the request should be rejected without comparing the total number of requests in the cell with a service specific threshold. On the other hand, if, upon receiving a request for a service, resource usage is below a second non-service specific threshold (defining that sufficient resource capacity is available independent of the service type requested), the resource should always be allocated and the request should be accepted without comparing the total number of requests in the cell with a service specific threshold.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIGS. 1A and 1B show schematic illustrations of a radio communications networks;
FIG. 2 shows a flow chart of a method of resource allocation according to a first embodiment of the invention;
FIG. 3 shows a flow chart of a method of resource allocation according to a second embodiment of the invention; and
FIG. 4 is a schematic illustration of a network node comprising modules for a resource allocation algorithm according to FIGS. 2 or 3.

### DETAILED DESCRIPTION OF THE DRAWINGS

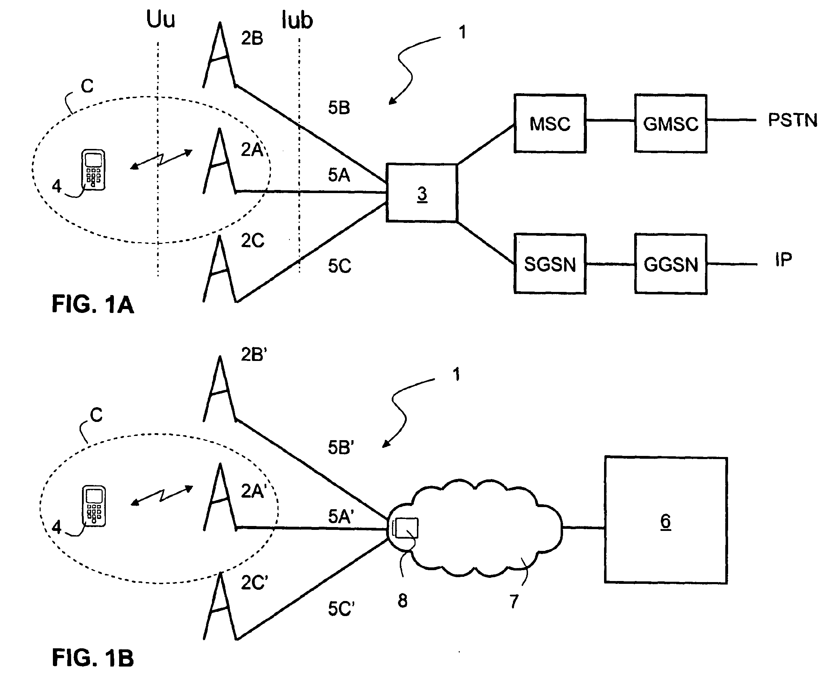

FIG. 1A is a schematic illustration of a UMTS communication system 1. UMTS communication system 1 comprises a radio access network having a plurality of wireless access stations 2A, 2B, 2C and a radio network controller 3. Below, the wireless access stations 2A-2C are referred to as Node-Bs, whereas controller 3 is abbreviated as RNC (radio network controller) for the system of FIG. 1A.

The Node-Bs 2A-2C provide wireless access for a user device 4 (also referred to as user equipment UE) by defining and supporting one or more cells C. The radio interface between the UE 4 and Node-B is referred to as the Uu-interface.

Each Node-B 2A-2C has a corresponding data connection 5A-5C to the RNC 3 of the radio access network. The interface between a Node-B and the RNC is referred to as the Iub interface. The data connections 5A-5C may e.g. be E1 data connections with a data transmission capacity of 2Mbps. Higher data transmission capacities may be obtained by using multiple E1 data connections or using E3 data connections (34 Mbps) or STM-1 data connections (150 Mbps).

RNC 3 connects Node-Bs 2A-2C to the core network. The core network is configured for transferring user data either via a MSC and a GMSC to e.g. a PSTN network (for voice service) or via an SMSC and a GGSN to e.g. an IP network (for data services).

In operation, services may be provided from the core network upon request by the user device 4, via the RNC 3 and Node-B 2A to the user device 4 (downlink communication), assuming that user terminal is in one of the cells C of Node-B 2A. Resource allocation for provided the service(s) is managed in the RNC 3.

Other communication systems, such as system 1' schematically depicted in FIG. 1B, may not have an RNC. An IP network 7, or other network, is provided between the wireless access stations 2A' - 2C' and the core network 6. Network 7 may comprise a controller 8 configured for performing one or more steps according to an embodiment of the invention by managing radio resources. The controller 8 may be a GGSN-like module. Alternatively, the controller 8 is provided with each of the wireless access stations. Examples of such communication systems include Long Term Evolution (LTE, also referred to as '4G') communication systems or WiMAX communication systems. In LTE systems, wireless access stations 2A'-2C' are referred to as eNBs.

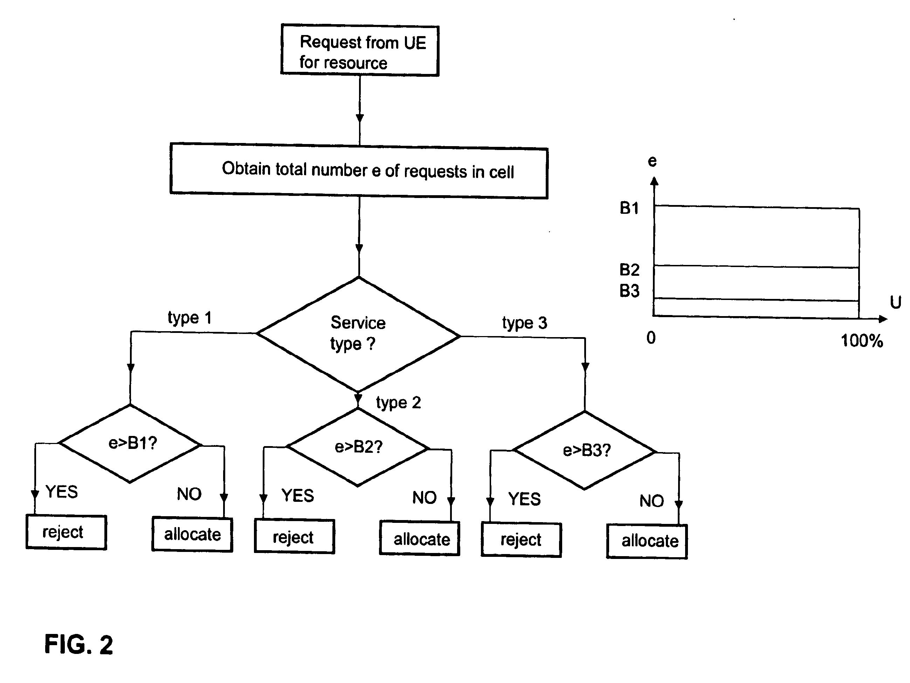

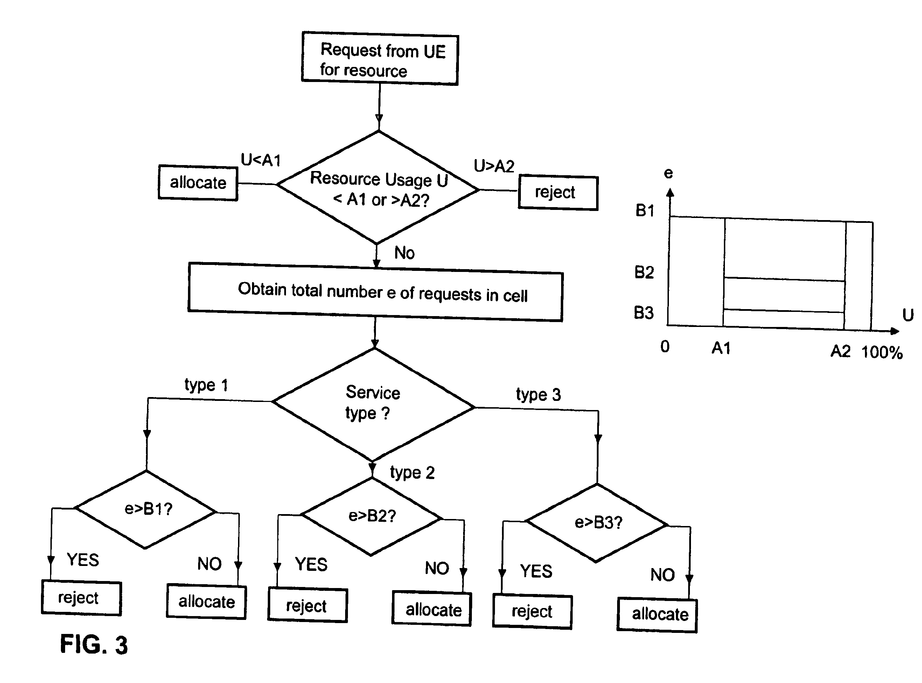

Embodiments of the invention will now be explained with reference to FIGS. 2 and 3 with regard to the communication system 1 of FIG. 1A or FIG. 1B for downlink communication. It should be appreciated however, the embodiments are, *mutatis mutandis,* suitable for uplink communication or downlink communication.

FIG. 2 shows a flow chart of a method of resource allocation according to a first embodiment of the invention. A request is received from a user device 4 in cell C for a service, e.g. voice. In order to service this request, one or more resources from the radio network are required. The flow chart of FIG. 2 is applicable for one or more of the requested resources. It should be appreciated that if a plurality of resources is required to provide a service, the proposed method can be used for allocating one or more of the resources, while other methods are used for other resources.

In order to perform the algorithm, the total number e of requests (for all services) is determined upon receiving the request for the said service. This number may be calculated by using historical averaging (the average number of users at a particular moment in the past) or otherwise (such as the method disclosed in US 6,721,568).

Also, the request for the service from the user device is analyzed to determine the type of the requested service. For example, service type 1 is a voice service, service type 2 is a data service and service type 3 is a real-time service (e.g. mobile TV).

For each service type, a service specific threshold B1, B2, B3 has been determined. This threshold preferably relates to the number of connections that the network operator allows in the specific cell C for each service. As an example, the network operator may have determined that 60 connections are allowed in the cell C for accepting new voice services, 30 for accepting new data services and 10 for accepting new real time services as shown in the right-hand side diagram of FIG. 2 (wherein U is the usage of the resource in percentages).In principle, these thresholds B1, B2, B3 could also be the same if the same priority is applied by the operator.

Upon receipt of the request from the user device 4, it is determined what type of service is requested by the user device in a manner known as such for the person skilled in the art. In the present example, a voice service is requested, i.e. service type 1. Then, it is determined whether the total number e of requests in the cell at the moment of receiving the request exceeds voice service specific threshold B1. If so, the resource will not be allocated and the request for the service will be rejected. If e<B1, the resource will be allocated and the request for the voice service will be accepted. A similar algorithm is performed for requests for service types 2 or 3, wherein thresholds B2, B3, different from B1, are used to determine whether or not a resource should be allocated. B1, B2 and B3 may be varied by the operator in accordance with his preferences. For instance, if the operator want to increase the priority of data connections in the network, the threshold B2 can be increased. An Operator might change the thresholds also if it measured that the threshold is too conservative and the resources are underutilized. If the operator has increased the efficiency of the network (new technology) the threshold might be increased because more users can be served with the same amount of resources. If the operator has extended the capacity then the thresholds can be increased.

Upon receipt of the request for a specific service from user device 4, the overall usage of the resource may first be taken into account prior to performing the analysis as described with reference to FIG. 2 in order to avoid unnecessary processing in the network. This embodiment is shown in the flow chart of FIG. 3.

When the request for a specific service is received from the user device 4, the overall usage U of the resource(s) is determined by analysing this usage with respect to service-independent thresholds A1 and A2. In particular, if the resource usage is below 40% (A1), a request for service may be allowed independent of the type of service requested. On the other hand, if the resource usage U is above 90% (A2), the request for service should never be allowed (also independent of the type of service requested), since sufficient resource capacity should remain for the network. This filtering procedure is schematically illustrated in the right-hand side diagram of FIG. 3.

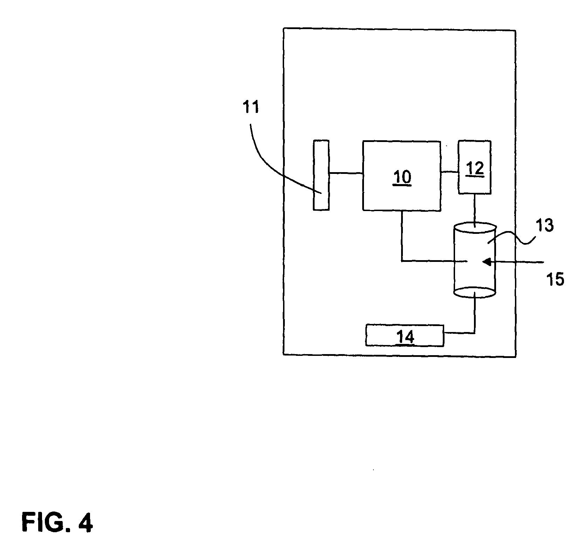

As mentioned above, the RNC 3 (or more generally: a network node) in the radio communications network may perform the tasks described with reference to FIGS. 2 and 3. FIG. 4 provides a schematic illustration of the RNC showing modules (which may be portions of software code running on a processor) responsible for carrying out one or more steps of the algorithm. In particular, the RNC 3 comprises a processor 10, a receiver 11 configured for receiving a request for a resource (service) and means 12 for obtaining the total number of requests for service in the cell C. Service dependent thresholds B1, B2, and B3 and service independent thresholds A1, A2 are stored in storage module 13. Also, the total number e of requests as defined above can be stored in this module 13. Processor 10, while performing the above algorithm using these modules, functions as an allocation means for allocating the resources. Variation means 14 are provided to vary the service dependent thresholds B1, B2 and B3. The arrow 15 indicates that data may also be received from externally, such as updates for the total number e of requests for a resource based on historical averaging or predictive calculation.

## Claims

1. A method of allocating a resource in a radio communications network (1) configured for providing to a user device at least a first service type and a second service type in a cell (C) of said network, said first service type and said second service type both requiring said resource, said method comprising the steps in the radio communications network of:
- receiving, from said user device (4), a request for a service requiring said resource;
- determining whether said request for a service is for said first service type or said second service type; **characterized by**:- obtaining a total number of service requests for said cell;
- depending on whether said request is for said first service type or said second service type, allocating said resource to provide said first service type to said user device only if said total number of requests complies with a first threshold (B1) being specific for said first service type or allocating said resource to provide said second service type to said user device only if said total number of requests complies with a second threshold (B2) being specific for said second service type.

2. The method according to claim 1, further comprising the step of obtaining said total number of service requests for said cell by predictive calculation.

3. The method according to claim 1, wherein said first and second service specific thresholds relate to a pre-determined number of requests to be allowed for said first service type and said second service type, respectively.

4. The method according to one or more of the preceding claims, further comprising the step of varying at least one of said first and second service specific thresholds by an operator of said radio communications network.

5. The method according to one or more of the preceding claims, further comprising the steps of:
- determining usage of said resource; and
- rejecting said request without determining whether said total number of requests complies with said first or second service specific thresholds if said resource usage exceeds a first non-service specific threshold.

6. The method according to one or more of the preceding claims, further comprising the steps of:
- determining usage of said resource; and
- allocating said resource without determining whether said total number of requests complies with said first or second service specific thresholds if said resource usage remains below a second non-service specific threshold.

7. The method according to claim 5 and 6, further comprising the step of determining whether said resource should be allocated only if said resource usage is between said first and second non-service specific thresholds.

8. A computer program comprising software code portions configured for, when executed on a computing device, performing the method according to one or more of the preceding claims.

9. A radio communications network (1) configured for providing to a user device (4) at least a first service type and a second service type in a cell (C) of said network, both said first service type and said second service type requiring a same resource, the radio communications network comprising:
- a node (3) configured for receiving a request for a service from said user device;
- determination means configured for determining whether said request for a service is for said first service type or said second service type; **characterized by**
- means configured for obtaining a total number of requests for service in said cell; and
- allocation means configured for, depending on whether said request is for said first service type or said second service type, allocating said resource for providing said first service type to said user device only if said total number of requests complies with a first threshold (B1) being specific for said first service type or allocating said resource for providing said second service type to said user device only if said total number of requests complies with a second threshold (B2) being specific for said second service type.

10. The radio communications network according to claim 9, further comprising calculation means for obtaining said total number of service requests in said cell.

11. The radio communications network according to claim 9 or 10, wherein said first and second service specific thresholds relate to a pre-determined number of requests to be allowed for said first service type and second service type, respectively.

12. The radio communications network according to claim 10 or 11, further comprising variation means configured for varying at least one of said first and second service specific thresholds.

13. The radio communications network according to one or more of the preceding claims 9-12, further comprising:
- means configured for determining usage of said resource;
- a rejector configured for rejecting said request without determining whether said total number of requests complies with said first and second service specific thresholds if said resource usage exceeds a first non-service specific threshold.

14. The radio communications network according to one or more of the preceding claims 10-13, further comprising means configured for determining usage of said resource, wherein said allocation means are configured for allocating said resource without determining whether said total number of requests complies with said first and second service specific thresholds if said resource usage remains below a second non-service specific threshold.

15. The radio communications network according to claim 13 and 14, further comprising processing means configured for determining whether said resource should be allocated only if said resource usage is between said first and second non-service specific thresholds.

## Patentansprüche

1. Verfahren zum Vergeben eines Betriebsmittels in einem Funkkommunikationsnetz (1), das dafür ausgelegt ist, einer Benutzereinrichtung mindestens einen ersten Diensttyp und einen zweiten Diensttyp in einer Zelle (C) des Netzes bereitzustellen, wobei der erste Diensttyp und der zweite Diensttyp beide das Betriebsmittel erfordern, wobei das Verfahren die folgenden Schritte in dem Funkkommunikationsnetz umfasst:
- Empfangen einer Anforderung eines Dienstes, der das Betriebsmittel erfordert, von der Benutzereinrichtung (4);
- Bestimmen, ob die Anforderung eines Dienstes für den ersten Diensttyp oder den zweiten Diensttyp ist; **gekennzeichnet durch**
- Erhalten einer Gesamtzahl von Dienstanforderungen für die Zelle;
- abhängig davon, ob die Anforderung für den ersten Diensttyp oder den zweiten Diensttyp ist, Vergeben des Betriebsmittels, um der Benutzereinrichtung den ersten Diensttyp bereitzustellen, nur dann, wenn die Gesamtzahl der Anforderungen einer ersten Schwelle (B1) genügt, die für den ersten Diensttyp spezifisch ist, oder Vergeben des Betriebsmittels, um der Benutzereinrichtung den zweiten Diensttyp bereitzustellen, nur dann, wenn die Gesamtzahl der Anforderungen einer zweiten Schwelle (B2) genügt, die für den zweiten Dienst spezifisch ist.

2. Verfahren nach Anspruch 1, ferner mit dem Schritt des Erhaltens der Gesamtzahl der Dienstanforderungen für die Zelle durch prädiktive Berechnung.

3. Verfahren nach Anspruch 1, wobei die erste und zweite dienstspezifische Schwelle eine vorbestimmte Anzahl von Anforderungen betreffen, die für den ersten Diensttyp bzw. den zweiten Diensttyp zu erlauben ist.

4. Verfahren nach einem oder mehreren der vorhergehenden Ansprüche, ferner mit dem Schritt des Variierens der ersten und/oder der zweiten dienstspezifischen Schwelle durch einen Betreiber des Funkkommunikationsnetzes.

5. Verfahren nach einem oder mehreren der vorhergehenden Ansprüche, ferner mit den folgenden Schritten:
- Bestimmen der Auslastung des Betriebsmittels; und
- Zurückweisen der Anforderung, ohne zu bestimmen, ob die Gesamtzahl der Anforderungen der ersten oder zweiten dienstspezifischen Schwelle genügt, wenn die Betriebsmittelauslastung eine erste nicht dienstspezifische Schwelle übersteigt.

6. Verfahren nach einem oder mehreren der vorhergehenden Ansprüche, ferner mit den folgenden Schritten:
- Bestimmen der Auslastung des Betriebsmittels; und
- Vergeben des Betriebsmittels, ohne zu bestimmen, ob die Gesamtzahl der Anforderungen der ersten oder zweiten dienstspezifischen Schwelle genügt, wenn die Betriebsmittelauslastung unter einer zweiten nicht dienstspezifischen Schwelle bleibt.

7. Verfahren nach Anspruch 5 und 6, ferner mit dem Schritt des Bestimmens, ob das Betriebsmittel vergeben werden sollte, nur dann, wenn die Betriebsmittelauslastung zwischen der ersten und zweiten nicht dienstspezifischen Schwelle liegt.

8. Computerprogramm, das Softwarecodeteile umfasst, die dafür ausgelegt sind, wenn sie auf einer Datenverarbeitungseinrichtung ausgeführt werden, das Verfahren nach einem oder mehreren der vorhergehenden Ansprüche auszuführen.

9. Funkkommunikationsnetz (1), das dafür ausgelegt ist, einer Benutzereinrichtung (4) mindestens einen ersten Diensttyp und einen zweiten Diensttyp in einer Zelle (C) des Netzes bereitzustellen, wobei der erste Diensttyp und der zweite Diensttyp beide ein selbes Betriebsmittel erfordern, wobei das Funkkommunikationsnetz Folgendes umfasst:
- einen Knoten (3), der dafür ausgelegt ist, eine Anforderung eines Dienstes von der Benutzereinrichtung zu empfangen;
- Bestimmungsmittel, die dafür ausgelegt sind, zu bestimmen, ob die Anforderung für einen Dienst für den ersten Diensttyp oder den zweiten Diensttyp ist; **gekennzeichnet durch**
- Mittel, die dafür ausgelegt sind, eine Gesamtzahl von Anforderungen für Dienst in der Zelle zu erhalten; und
- Vergabemittel, die dafür ausgelegt sind, abhängig davon, ob die Anforderung für den ersten Diensttyp oder den zweiten Diensttyp ist, das Betriebsmittel zum Bereitstellen des ersten Diensttyps für die Benutzereinrichtung nur dann zu vergeben, wenn die Gesamtzahl der Anforderungen einer ersten Schwelle (B1) genügt, die für den ersten Diensttyp spezifisch ist, oder das Betriebsmittel zum Bereitstellen des zweiten Diensttyps für die Benutzereinrichtung nur dann zu vergeben, wenn die Gesamtzahl der Anforderungen einer zweiten Schwelle (B2) genügt, die für den zweiten Diensttyp spezifisch ist.

10. Funkkommunikationsnetz nach Anspruch 9, das ferner ein Berechnungsmittel zum Erhalten der Gesamtzahl von Dienstanforderungen in der Zelle umfasst.

11. Funkkommunikationsnetz nach Anspruch 9 oder 10, wobei die erste und zweite dienstspezifische Schwelle eine vorbestimmte Anzahl von Anforderungen betreffen, die für den ersten Diensttyp bzw. den zweiten Diensttyp zuzulassen sind.

12. Funkkommunikationsnetz nach Anspruch 10 oder 11, das ferner ein Variationsmittel umfasst, das dafür ausgelegt ist, die erste und/oder die zweite dienstspezifische Schwelle zu variieren.

13. Funkkommunikationsnetz nach einem oder mehreren der vorhergehenden Ansprüche 9-12, ferner umfassend:
- ein Mittel, das dafür ausgelegt ist, die Auslastung des Betriebsmittels zu bestimmen;
- einen Zurückweiser, der dafür ausgelegt ist, die Anforderung zurückzuweisen, ohne zu bestimmen, ob die Gesamtzahl der Anforderungen der ersten und zweiten dienstspezifischen Schwelle genügt, wenn die Betriebsmittelauslastung eine erste nicht dienstspezifische Schwelle übersteigt.

14. Funkkommunikationsnetz nach einem oder mehreren der vorhergehenden Ansprüche 10-13, das ferner ein Mittel umfasst, das dafür ausgelegt ist, die Auslastung des Betriebsmittels zu bestimmen, wobei das Vergabemittel dafür ausgelegt ist, das Betriebsmittel zu vergeben ohne zu bestimmen, ob die Gesamtzahl der Anforderungen der ersten und zweiten dienstspezifischen Schwelle genügt, wenn die Betriebsmittelauslastung unter einer zweiten nicht dienstspezifischen Schwelle bleibt.

15. Funkkommunikationsnetz nach Anspruch 13 und 14, das ferner Verarbeitungsmittel umfasst, die dafür ausgelegt sind, zu bestimmen, ob das Betriebsmittel nur dann vergeben werden sollte, wenn die Betriebsmittelauslastung zwischen der ersten und zweiten nicht dienstspezifischen Schwelle liegt.

## Revendications

1. Procédé d'attribution d'une ressource dans un réseau de radiocommunication (1) conçu pour procurer à un dispositif d'utilisateur au moins un premier type de service et un deuxième type de service dans une cellule (C) dudit réseau, ledit premier type de service et ledit deuxième type de service nécessitant tous deux ladite ressource, ledit procédé comprenant les étapes, dans le réseau de radiocommunication, consistant à :
- recevoir, de la part dudit dispositif d'utilisateur (4), une demande d'un service nécessitant ladite ressource ;
- établir si ladite demande d'un service porte sur ledit premier type de service ou ledit deuxième type de service ;
le procédé étant **caractérisé en ce qu'**il comprend les étapes consistant à :
- obtenir un nombre total de demandes de service pour ladite cellule ;
- selon que ladite demande porte sur ledit premier type de service ou ledit deuxième type de service, attribuer ladite ressource pour procurer ledit premier type de service audit dispositif d'utilisateur uniquement si ledit nombre total de demandes respecte un premier seuil (B1) propre audit premier type de service, ou attribuer ladite ressource pour procurer ledit deuxième type de service audit dispositif d'utilisateur uniquement si ledit nombre total de demandes respecte un deuxième seuil (B2) propre audit deuxième type de service.

2. Procédé selon la revendication 1, comprenant en outre l'étape consistant à obtenir ledit nombre total de demandes de service pour ladite cellule par un calcul prédictif.

3. Procédé selon la revendication 1, lesdits premier et deuxième seuils propres à un service se rapportant à un nombre prédéfini de demandes admissible respectivement pour ledit premier type de service et pour ledit deuxième type de service.

4. Procédé selon au moins une des revendications précédentes, comprenant en outre l'étape consistant à faire varier au moins un desdits premier et deuxième seuils propres à un service par un exploitant dudit réseau de radiocommunication.

5. Procédé selon au moins une des revendications précédentes, comprenant en outre les étapes consistant à :
- établir un taux d'utilisation de ladite ressource ; et
- rejeter ladite demande sans établir si ledit nombre total de demandes respecte lesdits premier ou deuxième seuils propres à un service si ledit taux d'utilisation de la ressource dépasse un premier seuil non propre à un service.

6. Procédé selon au moins une des revendications précédentes, comprenant en outre les étapes consistant à :
- établir un taux d'utilisation de ladite ressource ; et
- attribuer ladite ressource sans établir si ledit nombre total de demandes respecte lesdits premier ou deuxième seuils propres à un service si ledit taux d'utilisation de la ressource reste inférieur à un deuxième seuil non propre à un service.

7. Procédé selon les revendications 5 et 6, comprenant en outre l'étape consistant à établir s'il convient d'attribuer ladite ressource uniquement si ledit taux d'utilisation de la ressource est compris entre lesdits premier et deuxième seuils non propres à un service.

8. Programme d'ordinateur comprenant des parties de code de logiciel conçues, une fois exécutées sur un dispositif informatique, pour mettre en oeuvre le procédé selon au moins une des revendications précédentes.

9. Réseau de radiocommunication (1) conçu pour procurer à un dispositif d'utilisateur (4) au moins un premier type de service et un deuxième type de service dans un cellule (C) dudit réseau, ledit premier type de service et ledit deuxième type de service nécessitant tous deux une même ressource, le réseau de radiocommunication comprenant :
- un noeud (3) conçu pour recevoir, de la part dudit dispositif d'utilisateur, une demande d'un service ;
- un moyen d'établissement conçu pour établir si ladite demande d'un service porte sur ledit premier type de service ou ledit deuxième type de service ;
le réseau de radiocommunication étant **caractérisé par** :
- un moyen conçu pour obtenir un nombre total de demandes de service dans ladite cellule ; et
- un moyen d'attribution conçu, selon que ladite demande porte sur ledit premier type de service ou ledit deuxième type de service, pour attribuer ladite ressource pour procurer ledit premier type de service audit dispositif d'utilisateur uniquement si ledit nombre total de demandes respecte un premier seuil (B1) propre audit premier type de service, ou pour attribuer ladite ressource pour procurer ledit deuxième type de service audit dispositif d'utilisateur uniquement si ledit nombre total de demandes respecte un deuxième seuil (B2) propre audit deuxième type de service.

10. Réseau de radiocommunication selon la revendication 9, comprenant en outre un moyen de calcul conçu pour obtenir ledit nombre total de demandes de service dans ladite cellule.

11. Réseau de radiocommunication selon la revendication 9 ou 10, lesdits premier et deuxième seuils propres à un service se rapportant à un nombre prédéfini de demandes admissible respectivement pour ledit premier type de service et pour ledit deuxième type de service.

12. Réseau de radiocommunication selon la revendication 10 ou 11, comprenant en outre un moyen de variation conçu pour faire varier au moins un desdits premier et deuxième seuils propres à un service.

13. Réseau de radiocommunication selon au moins une des revendications 9 à 12, comprenant en outre :
- un moyen conçu pour établir un taux d'utilisation de ladite ressource ;
- un moyen de rejet conçu pour rejeter ladite demande sans établir si ledit nombre total de demandes respecte lesdits premier et deuxième seuils propres à un service si ledit taux d'utilisation de la ressource dépasse un premier seuil non propre à un service.

14. Réseau de radiocommunication selon au moins une des revendications 10 à 13, comprenant en outre un moyen conçu pour établir un taux d'utilisation de ladite ressource, ledit moyen d'attribution étant conçu pour attribuer ladite ressource sans établir si ledit nombre total de demandes respecte lesdits premier et deuxième seuils propres à un service si ledit taux d'utilisation de la ressource reste inférieur à un deuxième seuil non propre à un service.

15. Réseau de radiocommunication selon les revendications 13 et 14, comprenant en outre un moyen de traitement conçu pour établir s'il convient d'attribuer ladite ressource uniquement si ledit taux d'utilisation de la ressource est compris entre lesdits premier et deuxième seuils non propres à un service.
